# EUROPEAN PATENT APPLICATION

(11) **EP 4 821 600 A1**
(43) Date of publication of application: **14.10.2026**
(21) Application number: 25170024.1
(22) Date of filing: 11.04.2025
(51) Int. Cl.: B01L 3/00

(54) **LIQUID STORAGE PLATE, MODULAR PLATE SYSTEM, AND ROBOTIC LIQUID HANDLING SYSTEM**

(71) Applicant: Leica Microsystems CMS GmbH, 35578 Wetzlar (DE)
(72) Inventor: Christ, Stefan, 35578 Wetzlar (DE); Tille, Sebastian, 35578 Wetzlar (DE)
(74) Representative: Schaumburg und Partner Patentanwälte mbB

(57) **Abstract**

A liquid storage plate (106) is configured to be used in a liquid handling system (100) having a syringe (104) with a needle (118) for liquid transfer. The liquid storage plate (106) comprises a substantially planar carrier (218) defining a top side (234), and a plurality of container cavities (220) arranged on the carrier (218). Each container cavity (220) extends downwards from the top side (234) and is configured to store a liquid (230). At least one of the container cavities (220) forms a aspiration-optimized cavity (220b-220f) having an opening (232) at the top side (234) and a lowermost liquid collection portion (236) arranged opposite to the opening (232). The liquid collection portion (236) is narrowed in relation to the remainder of the aspiration-optimized cavity (220b-220f) to allow collection of residual liquid and insertion of the needle (118) for aspiration of the residual liquid.

## Description

### Technical field

The invention relates to a liquid storage plate, a modular plate system, and a robotic liquid handling system.

### Background

In life sciences, robotic liquid handling systems may be used to automate dispensing, transferring, and mixing of liquids, ensuring accuracy and reproducibility in laboratory workflows, for example in applications such as sample preparation, assay setup, and high-throughput screening. These systems may be provided with robots and automated pumps that are capable of handling liquids. This is a significant improvement over, for example, manual pipetting, as automation enables faster, more precise and less error-prone liquid handling.

For example, cyclic applications are used in spatial proteomics, in which a sample is repeatedly stained, imaged and destained. These applications use very expensive liquid substances such as antibodies and other chemicals. In a typical workflow, each staining round involves the simultaneous application of multiple antibodies and chemicals to the sample. The antibodies and chemicals must be stored separately and mixed before the experiment.

Typically, expensive liquid substances such as antibodies are stored in containers such as reaction tubes, centrifuge tubes or multi-well plates and retrieved from the containers by aspiration or expression of the liquids using needles or tube assemblies. When using tube assemblies, these must be positioned very carefully to ensure optimal emptying of the containers. Needle-based systems are generally more robust, but due to a mismatch between the shape of the needle and the inner space of the container, these systems cause a dead volume within the container in which residual liquid remains and is thus wasted.

### Summary

It is an object to provide a liquid storage plate which can be used in a liquid handling system having a syringe with a needle and allows for full drainage of stored liquids.

The afore-mentioned object is achieved by the subject-matter of the independent claims. Further embodiments are defined in the dependent claims and the following description.

The liquid storage plate is configured to be used in a liquid handling system having a syringe with a needle for liquid transfer. The liquid storage plate comprises a substantially planar carrier defining a top side, and a plurality of container cavities arranged on the carrier. Each container cavity extends downwards from the top side and is configured to store a liquid. At least one of the container cavities forms a aspiration-optimized cavity having an opening at the top side and a lowermost liquid collection portion arranged opposite to the opening. The liquid collection portion is narrowed in relation to the remainder of the aspiration-optimized cavity to allow collection of residual liquid and insertion of the needle for aspiration of the residual liquid.

The liquid storage plate may be provided in the form of a multiwell-like consumable with aspiration-optimized cavities, the shape of which is adapted to the shape of a needle of a syringe which is used to aspirate the liquid stored in the cavity. This allows complete emptying of the aspiration-optimized cavities, avoiding waste of expensive liquids such as antibodies. Thus, a disposable consumable is provided which is optimized for needle extraction and can be used advantageously, for example, in cyclic applications for multiplex staining. In this context, the term "aspiration-optimized" is understood to mean that the respective cavity is designed in such a way that it enables essentially complete aspiration of the liquid contained in the cavity.

According to an embodiment, the aspiration-optimized cavity tapers continuously downwards from the opening to form the liquid collection portion. Here, the aspiration-optimized cavity converges at least partially in the direction of its depth which facilitates the guidance of the needle on its way down into the liquid collection portion to aspirate residual liquid.

The liquid collection portion of the aspiration-optimized cavity may taper to a point, i.e. a tip. In this embodiment, the liquid collection portion fully converges down to a point where residual liquid is collected. This means that a space within the cavity where residual liquid remains is particularly small. The needle can be reliably guided into this space.

According to an embodiment, the aspiration-optimized cavity comprises a bottom having a recess which forms the liquid collection portion. The bottom of the aspiration-optimized cavity may be substantially planar, or it may be obliquely oriented so that residual liquid can flow by gravity into the recess without getting stuck in a dead space inside the cavity. Thus, it can be avoided that residual liquid remains e.g. in a corner portion within the aspiration-optimized cavity.

The liquid collection portion may be centrally arranged in the aspiration-optimized cavity. When using a robotic liquid handling system having a syringe with a needle to aspirate liquids from the liquid storage plate, control of the needle facilitated when the needle can be centered in the optimized-drainage cavity to remove residual fluid. However, the relative arrangement of the liquid collection portion within the aspiration-optimized cavity is not limited to a central arrangement. Depending on the specific requirements of the experiment or the liquids to be used, it may also be possible, for example, to form the liquid collection portion eccentrically within the aspiration-optimized cavity.

The aspiration-optimized cavity may have an anti-adhesive interior surface. The anti-adhesive property of the interior surface ensures that the residual liquid can flow down the interior without adhering to it, so that the liquid can collect in a small space from where it can be completely aspirated. To provide the interior surface with an anti-adhesive property, an anti-adhesive coating may be applied to the interior surface. As an alternative, the container cavity or even the liquid storage plate as a whole may be made from an anti-adhesive material. This is particularly advantageous when the liquid storage plate is provided in the form of a consumable that is specifically adapted to certain liquids which are used in a particular application. In this case, the anti-adhesive material of a single, possibly interchangeable container cavity or the whole liquid storage plate can be selected according to the properties of the specific liquids.

According to an embodiment, a liquid storage plate is provided which is configured to be used in a liquid handling system having a syringe with a needle for liquid transfer. The liquid storage plate comprises a substantially planar carrier defining a top side, and a plurality of container cavities arranged on the carrier, each container cavity extending downwards from the top side and configured to store a liquid. At least one of the container cavities forms a mixing cavity comprising a swirling structure which is configured to cause turbulence in the liquid upon liquid transfer.

The afore-mentioned embodiment can be used to efficiently mix at least two liquids within one or more of the container cavities of the liquid storage plate. This allows to provide the liquid storage plate with a mixing function that would otherwise have to be performed by a separate component of the fluid handling system. Outsourcing the mixing function to an external system component is quite costly. In terms of cost, it is advantageous to integrate the mixing function not into the liquid handling system, but into the liquid storage plate, especially if the liquid storage plate is provided as a consumable.

It should be noted that the embodiment providing the mixing function mentioned above can be combined with features providing other functions described above or below. For example, the liquid storage plate may comprise both dedicated aspiration-optimized cavities having the function of avoiding waste of expensive liquids and dedicated mixing cavities having the function of integrating a mixing capability into the liquid storage plate.

Each mixing cavity of the liquid storage plate comprises a swirling structure which facilitates, speeds up and improves mixing of liquids before liquids are injected onto the sample. The swirling structure is specifically designed to induce disturbance within the injected and/or aspirated liquids. For this, the swirling structure utilizes the fact that the liquid transfer into and out of the liquid storage plate occurs with some power. This means, for example, that the liquids are not slowly dripped into the respective container cavity, but are injected at a significant flow rate. Being injected relatively fast into the container cavity, the liquids are already provided with a certain swirl. This results in efficient interaction between the injected liquid and the swirling structure, which promotes the mixing effect.

The swirling effect described above is comparable to the effect achieved when liquids are channeled through a complex microfluidic system in which swirls are created at kinks where the direction of flow changes abruptly. The advantage of the solution presented here, however, is that this swirling effect is integrated into the liquid storage plate itself, without having to rely on external components such as complex microfluidics.

For example, in spatial proteomics, liquids of different viscosities often need to be mixed. In these cases, the integrated mixing function of the liquid storage plate is particularly advantageous.

The swirling structure may comprise an irregular contouring of an interior surface of the mixing cavity. Irregular contouring of the interior surface does not require any additional components to achieve the intended mixing effect. Rather, the mixing effect is achieved by suitably shaping the mixing cavity itself. For example, the mixing cavity may have different sections that are arranged at an angle to each other and serve as impact surfaces against which the liquid bounces during injection and/or aspiration. In a rather simple configuration, each mixing cavity comprises, in this order as seen from the opening, an upper section with a downwardly flaring cross-section, a middle section with a relatively enlarged cross-section, and a lower section with a downwardly tapering cross-section. Alternatively, the mixing container may have a meandering cross-section which forms a labyrinth-like injection path for the liquids.

Additionally or alternatively, the swirling structure comprises at least one liquid deflecting element which inwardly projects from the interior surface of the mixing cavity. The deflecting element may be formed of fin which crosses the path along which the liquids are injected into and extracted from the mixing cavity. Thus, the deflecting element forms an obstacle in the path along which the liquid is transferred into and out of the mixing cavity.

Additionally or alternatively, the swirling structure comprises at least one mixing tube extending downwards from the opening of the mixing cavity. For example, the mixing tube may be formed of a serpentine mixer providing a long, winding, serpentine-like channel which is designed to enhance mixing between liquids utilizing Dean flow and secondary flow effects. In this embodiment, the liquids are injected into the mixing tube and travel in slow turns down the full tube length. The curved structure of the mixing tube achieves a mainly diffusion-based and thus very gently mixing. The mixing tube may even be configured to form a ring mixer having circular or looped channel portions to enhance liquid mixing through Dean flow effects and recirculation.

The liquid storage plate may comprise a one-piece structure in which the container cavities are formed integrally on the carrier. In this embodiment, the liquid storage plate may be formed of a multiwell-like consumable having dedicated container cavities providing different functions such as complete liquid aspiration and liquid mixing as described above. Such a consumable can be made at low costs in accordance with a liquid handling protocol that is used to control a robotic liquid handling system to execute a predetermined workflow. In particular, the container cavities of the liquid storage plate can be suitably adapted to the liquid handling protocol.

For example, the relative arrangement of the container cavities can be configured in a suitable manner depending on the liquid handling protocol that defines an order in which the container cavities are accessed by a pipetting robot. Thus, the relative arrangement can be selected such that a particular liquid is first retrieved by the needle from one of the container cavities, which is optimized for liquid aspiration, and then injected into another container cavity which is optimized for liquid mixing. It should further be noted that each of the above-mentioned container cavities can be optimized in terms of both liquid aspiration and liquid mixing.

As an alternative, the liquid storage plate may comprise a multi-piece structure in which at least one of the container cavities is formed of an exchangeable container releasably mounted on the carrier. Such a multi-piece structure allows the liquid storage plate to be flexibly adapted to a specific experiment. For example, a snap-in mechanism may be provided for exchanging one container cavity for another. This makes it easy to replace the container cavities.

According to an embodiment, at least one of the container cavities forms a functional unit configured to provide an additional function going beyond a function of the other container cavities of the liquid storage plate. Just as an example, the afore-mentioned functional unit may include a bubble trap, i.e. a device used to remove air bubbles from the liquid which would otherwise enter the system and possibly damage the sample under investigation.

According to a further embodiment, at least one of the container cavities forms an imaging cavity arranged on the carrier and configured to receive a sample. The imaging cavity is at least partially transparent to allow imaging of the sample. The functionality of the liquid storage plate is further extended by providing transparent imaging cavities. This allows, for example, the provision of a multifunctional plate that includes storage capacity, mixing capacity, and imaging capacity.

According to an embodiment, a modular plate system comprises at least two liquid storage plates as disclosed herein and a coupling mechanism which is configured to modularly couple the liquid storage plates. In this configuration, the liquid storage plates form modules that can be flexibly assembled into a complete plate system offering various functions such as liquid storage, liquid mixing, sample imaging, etc. For example, a first part of the modular plate system may be provided with container cavities of a first type configured for liquid storage, while a second part of the modular plate system is provided with container cavities of a second type configured for liquid mixing, and a third part of the modular plate system is provided with container cavities of a third type configured for imaging of the samples. In such exemplary use case, the modular plate system can be moved between a storage position in which the container cavities of the first type are used, a mixing position in which the container cavities of the second type are used, and an imaging position in which the container cavities of the third type are used.

According to another aspect, a robotic liquid handling system for handling liquids which are to be applied to a sample comprises at least one storage plate as disclosed herein and a pipetting robot having a syringe with a needle configured to aspirate liquid from and inject liquid into the container cavities.

The robotic liquid handling system may comprise a control unit which is configured to control the pipetting robot in accordance with a predetermined liquid handling protocol. The liquid storage plate is configured as a consumable adapted to the predetermined liquid handling protocol.

According to an embodiment, the pipetting robot comprises a guiding sleeve configured to guide the needle of the syringe into each container cavity. The guiding sleeve serves to properly align the needle of the syringe properly relative to the respective container cavity so that the liquid can be efficiently aspirated from the container cavity. For example, in case that the liquid collection portion is centrally arranged in the aspiration-optimized cavity, the guiding sleeve can be used to center within the aspiration-optimized cavity to remove residual fluid. The guiding sleeve may be formed of a disposable component that is mounted on the syringe and shaped to fit the opening of the respective container cavity so that the guiding sleeve can be inserted flush into the container cavity in order to position the needle correctly therein.

### Short Description of the Figures

Hereinafter, embodiments are described referring to the drawings, wherein:
- Figure 1: is a schematic diagram showing a robotic liquid handling system according to an embodiment;
- Figure 2: is a plan view showing a liquid storage plate according to an embodiment;
- Figure 3: is a sectional side view showing a liquid storage plate including different embodiments of aspiration-optimized cavities;
- Figure 4: is a sectional side view showing a single mixing cavity according to an embodiment;
- Figure 5: is a sectional side view showing a liquid storage plate including a combination of aspiration-optimized cavities and mixing cavities;
- Figure 6: is a sectional side view showing a liquid storage plate having a replaceable container cavity;
- Figure 7: is a sectional side view showing the liquid storage plate in which a container cavity forms a specific functional unit according to an embodiment;
- Figure 8: is a sectional side view showing the liquid storage plate with a guiding sleeve inserted into the container cavities; and
- Figure 9: is a modular plate system comprising a plurality of liquid storage plates according to an embodiment.

### Detailed Description of the Figures

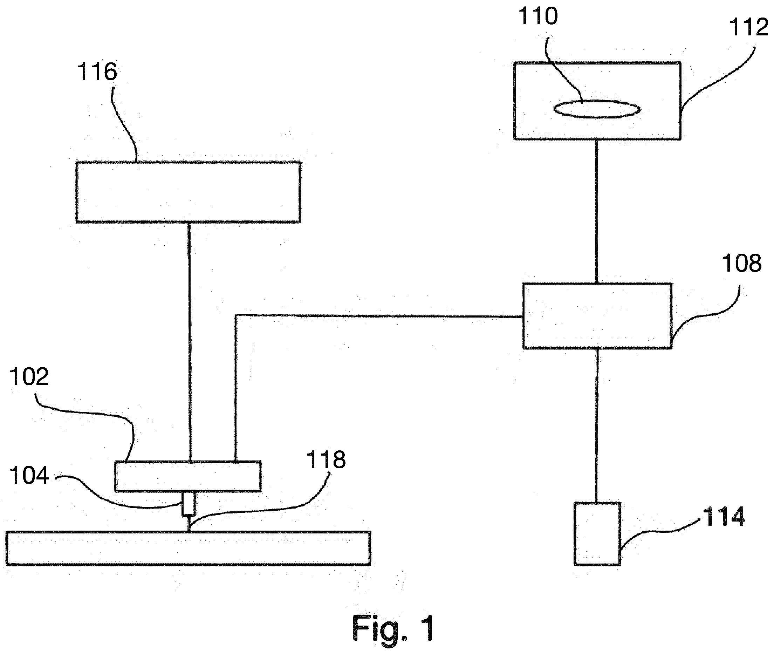

Figure 1 shows a robotic liquid handling system 100 according to an embodiment in a schematic diagram. It is to be noted that Figure 1 shows only those components of the robotic liquid handling system 100 that contribute to an understanding of the embodiment, and the robotic liquid handling system 100 may include additional components not shown in Figure 1.

The robotic liquid handling system 100 may be configured to automate a liquid handling workflow in the field of spatial biology. In particular, the robotic liquid handling system 100 can be used to automate dispensing, transferring, and mixing of liquids in a workflow including cyclic multiplexed immuno-fluorescence imaging.

The robotic liquid handling system 100 comprises a pipetting robot 102 capable of performing precise pipetting tasks in high-throughput experiments. More specifically, the pipetting robot 102, shown only schematically in Figure 1, may include a syringe 104 with a needle 118 configured to aspirate and dispense liquids from and into a liquid storage plate 106 described in more detail below. For this purpose, the pipetting robot 102 is moved across the liquid storage plate 106.

The robotic liquid handling system 100 may further comprise a pump system 108 which is connected to the pipetting robot 102. The pump system 108 serves to apply liquids aspirated by the pipetting robot 102 from the liquid storage plate 106 to a sample 110 which may be examined, for example, by means of a flow cell 112.

The pump system 110 may further be connected to one or more bottle containers generally referred to as 114 in Figure 1. This configuration allows liquids to be supplied from the bottle containers 114 via the pump system 110 and the pipetting robot 102 to the liquid container arrangement 106.

A control unit 116 is configured to control an overall operation of the robotic liquid handling system 100. In particular, the control unit 116 causes the pipetting robot 102 to move across the liquid storage plate 106 and to aspirate and dispense the liquids as provided in the workflow. More specifically, the control unit 116 may be configured to control the pipetting robot 102 according to a predefined liquid mixing protocol associated with the specific workflow.

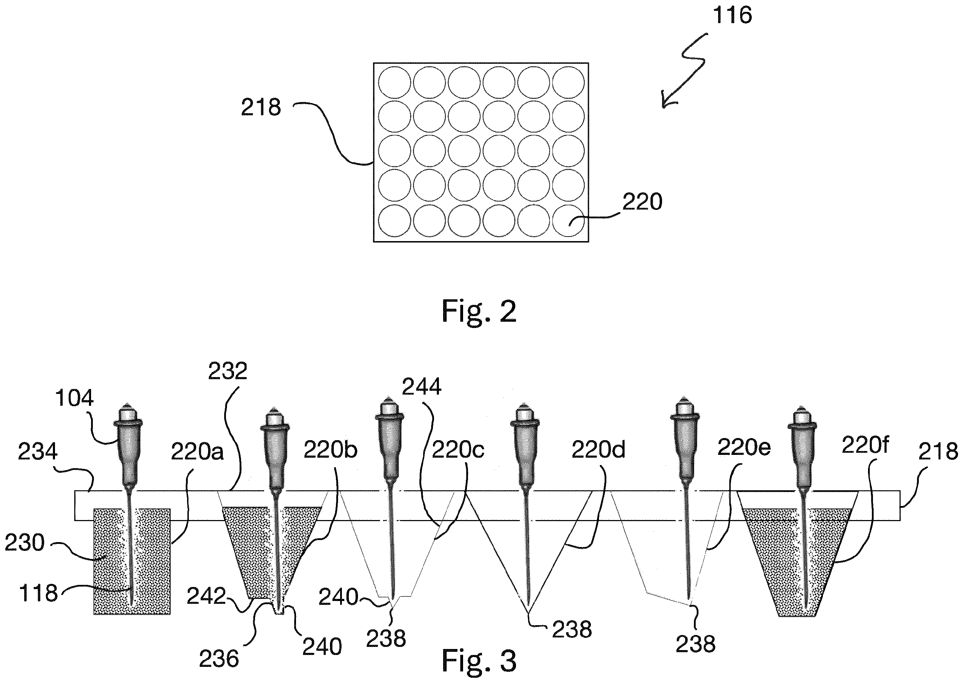

Figure 2 shows the liquid storage plate 106 according to an embodiment in a top view. The liquid storage plate 106 comprises a substantially planar carrier 218 on which a plurality of container cavities 220 is arranged. The container cavities 220 may have a circular shape in a top view, without being limited thereto. The carrier 218 may have a rectangular shape without being limited thereto, and the container cavities 220 are arranged on the carrier 218 in a rectangular grid pattern which makes it easy to access the different container cavities 220.

Figure 3 illustrates an embodiment of the liquid storage plate 106 in a side sectional view. In the example of Figure 3, the container cavities 220 are shown to be differently shaped. Although it should not be excluded that a significant number of different cavity types are included in the liquid storage plate 106, Figure 3 is primarily intended to illustrate the variety of configurations that the container cavities 220 may have to achieve the desired technical effects, as explained below. Thus, Figure 3 shows, from left to right, a first, conventionally shaped container cavity 220a as a comparative example, and five differently shaped container cavities 220b, 220c, 220d, 220e, 220f, which are configured for optimal drainage so that the syringe 104 can completely extract a remainder of liquid 230 from the respective container cavity.

As can be seen in the sectional side view of Figure 3, each aspiration-optimized cavity 220b to 220f has an opening 232 at a top side 234 into which the needle 118 of the syringe 104 is inserted to extract liquid 230 from the container cavity. Furthermore, each aspiration-optimized cavity 220b to 220f has a lowermost liquid collection portion 236 which is arranged opposite the opening 232. The liquid collection portion 236 is narrowed relative to the remainder of the aspiration-optimized cavity 220b to 220f and therefore allows collection of residual liquid which then can be aspirated by means of the needle 118. To allow complete insertion of the needle 118, the liquid collection portion 236 is adapted in its shape to the shape of the needle 118.

Compared to the conventionally shaped container cavity 220a, the aspiration-optimized cavities 220b to 220f allow the residual liquid to collect in a smaller space inside the cavity, making it easier to aspirate the liquid 230. This helps to avoid very expensive liquids such as antibody reagents remaining in the respective container cavity and thus being wasted.

Each of the aspiration-optimized cavities 220b to 220f may taper continuously downwards from the opening 232 to form the liquid collection portion 236. By comparison, the conventionally shaped container cavity 220a has a constant width over its entire depth which makes it difficult to completely remove the residual liquid.

In order to further improve collection of residual liquid in a small space, the liquid collection portion 236 of the aspiration-optimized cavity 220c, 220d, 220e may taper to a point 238, i.e. a tip. A distal end of the needle 118 can be brought into contact with the point 238 while aspirating the liquid 230.

Additionally or alternatively, the aspiration-optimized cavity 220b, 220c comprises a recess 240 which is arranged at a bottom 242 of the container cavity and forms the liquid collection portion 236. In case of the aspiration-optimized cavity 220b, 220c, the bottom 242 is formed of a substantially flat, horizontally oriented cavity section. However, the bottom may also be obliquely oriented so that the residual liquid is directed by gravity to the lowest position within the aspiration-optimized cavity and collected at this position.

As a further example, the liquid collection portion 236 may be arranged at a center of the respective aspiration-optimized cavity 220c. In an alternative embodiment, the liquid collection portion 236 is eccentrically located in the aspiration-optimized cavity 220b.

In order to allow the liquid to completely pearl off an interior surface 244 of the aspiration-optimized cavity, the interior surface 244 may be formed to have an anti-adhesive property with respect to the liquid. Such an anti-adhesive property can be achieved by applying an anti-adhesive coating onto the interior surface 244. However, the desired anti-adhesive effect can also be achieved by using a suitable material from which the aspiration-optimized cavity is made or, if the container cavities are formed integrally on the carrier, the liquid storage plate 106 is made as a whole.

In addition to the function of improving liquid aspiration, at least one container cavity of the liquid storage plate 106 may be designed to provide a function of creating turbulence in the liquid when the liquid is injected into and/or aspirated from the container cavity. Such a function can advantageously be used when two or more liquids are to be mixed prior to an experiment. To implement a mixing function, at least one of the container cavities may form a mixing cavity comprising a swirling structure that is configured to cause the desired liquid turbulence upon injection and/or aspiration of the liquid.

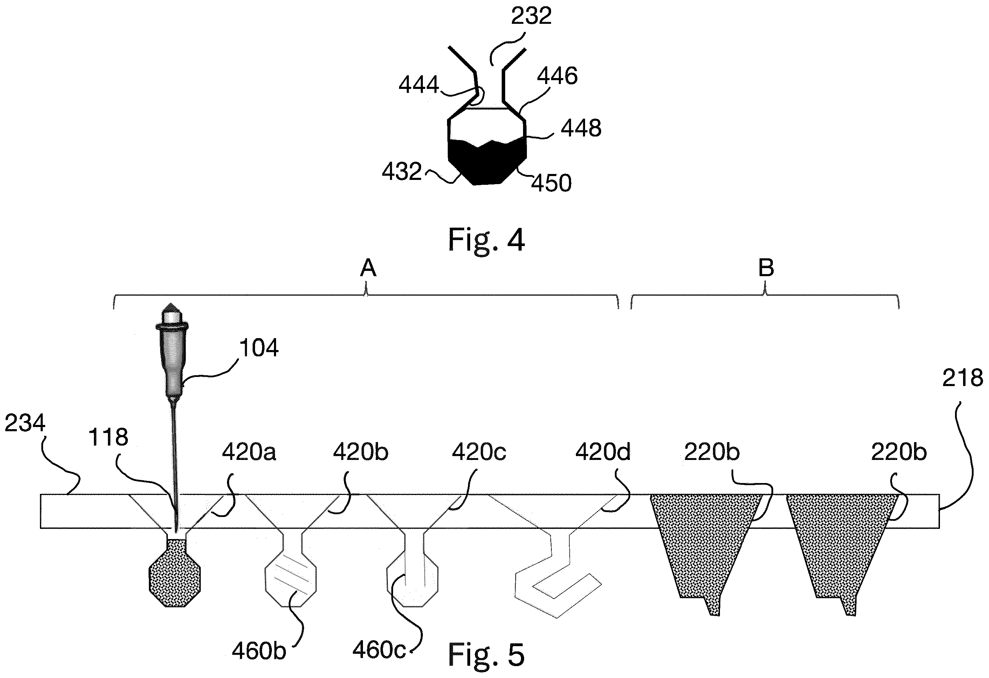

Figure 4 is a sectional side view showing a mixing cavity 420 storing two liquids 430, 432 to be mixed. In the example shown in Figure 4, the swirling structure which achieves the intended mixing effect is implemented by an irregular contouring of an internal surface of the mixing cavity 420. Thus, the mixing cavity 420 comprises, in this order as seen from the opening 232, an upper section 446 with a downwardly flaring cross-section, a middle section 448 with a relatively enlarged cross-section, and a lower section 450 with a downwardly tapering cross-section. The relatively inclined cavity sections 446, 448, 450 enable efficient mixing of the liquids that are injected into or aspirated out of the container cavity 420. The mixing effect is enhanced by the fact that the liquids have a kind of swirl when they are injected into or aspirated out of the container cavity 420 at a certain speed. During injection or aspiration, the liquids collide with the angled cavity sections 446, 448, 450 and are thereby mixed.

Figure 5 illustrates a further embodiment of the storage plate 106 in a side sectional view. Similar to the example shown in Figure 3, the container cavities of the storage plate 106 are shown to be differently configured. Although a significant number of different cavity types may be included in the liquid storage plate 106, Figure 5 is primarily intended to illustrate the variety of configurations that the container cavities can have in order to achieve the desired mixing effect.

Figure 5 shows, from left to right, four differently designed mixing cavities 420a, 420b, 420c, 420d as well as the two aspiration-optimized cavities 220b as already described with reference to Figure 3. The mixing cavities 420a to 420d may form a first cavity group A, which is used to efficiently mix the liquids without the need for an external device, while the aspiration-optimized cavities 240b may form a second cavity group B, which is used to store expensive antibody reagents.

Each of the mixing cavities 420a to 420d is designed to induce disturbance inside the liquids when these are injected and/or retrieved thereby facilitating a mixing process which would otherwise have to be executed by an external device. While the swirling structure of the mixing cavity 420a is implemented by an irregular contouring of the interior surface as explained above with reference to Figure 4, the swirling structure of the mixing cavity 420b of Figure 5 comprises at least one liquid deflecting element which may be formed e.g. of one or more mixing fins 460b. The latter may be arranged in an injection path along which the liquids are injected into the mixing cavity 420b. During injection or aspiration, the liquids collide with the mixing fins 460b and are thus mixed.

According to another embodiment, the mixing cavity 420c comprises at least one mixing tube 460c which extends along the injection path. The mixing tune 460 forms, for example, a serpentine mixer comprising a winding, serpentine-like channel which enhances mixing between the liquids utilizing Dean flow effects.

Another example is the mixing cavity 420d in Figure 5 having a labyrinth-like, meandering cross-section that causes several changes in direction when the liquids are injected into and extracted from the mixing cavity 420d. These changes in direction ensure that the liquids are mixed efficiently.

In the embodiments shown in Figures 2 to 5, the liquid storage plate 106 may comprise a one-piece structure in which the container cavities are formed integrally on the carrier 218. Such a single-piece structure can be used as a consumable that fulfils the intended functions such as complete liquid aspiration and efficient liquid fluid mixing.

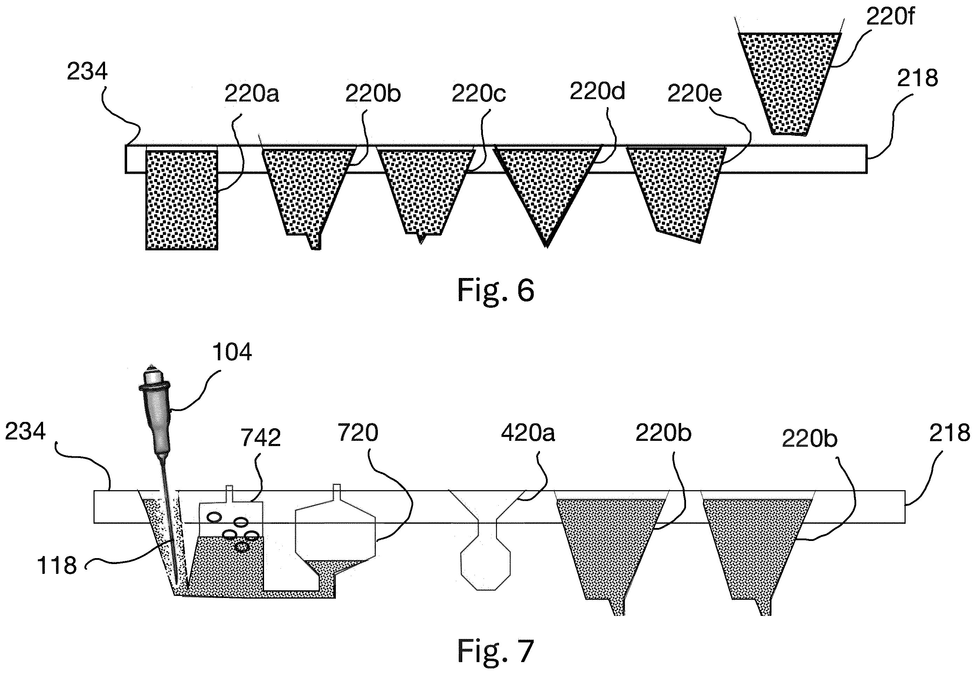

Figure 6 is a sectional side view showing a modification of the liquid storage plate 106. This modification comprises a multi-piece structure in which at least one of the container cavities is formed of exchangeable container releasably mounted on the carrier 218. In the example shown in Figure 6, the aspiration-optimized cavity 220f can be selectively fixed to the carrier 218 and removed therefrom. For this purpose, a snap-in mechanism may be provided to connect the aspiration-optimized cavity 220f and the carrier 218 by simply snapping the aspiration-optimized cavity 220f into a correspondingly shaped recess formed in the carrier 218. It goes without saying that also the other container cavities 220a to 220e, 420a to 420d shown in Figures 2 to 6 may also be replaceable as described above.

Such a multi-piece structure with replaceable container cavities can be used to expand the functionality of the liquid storage plate 106 as needed. More specifically, at least one of the container cavities may form a functional unit which is configured to provide an additional function to the liquid storage plate 106 which goes beyond the functions described above, such as complete liquid aspiration and liquid mixing.

An example is shown in Figure 7 in which the afore-mentioned functional unit is formed of a container cavity 720 which comprises a device such as a passive bubble trap 742.

All container cavities including the container cavity 740 provided with the bubble trap 742 may be formed of consumables which can be simply connected to and removed from the carrier 218 by means of a snap-in mechanism in order to expand the functionality of the liquid storage plate.

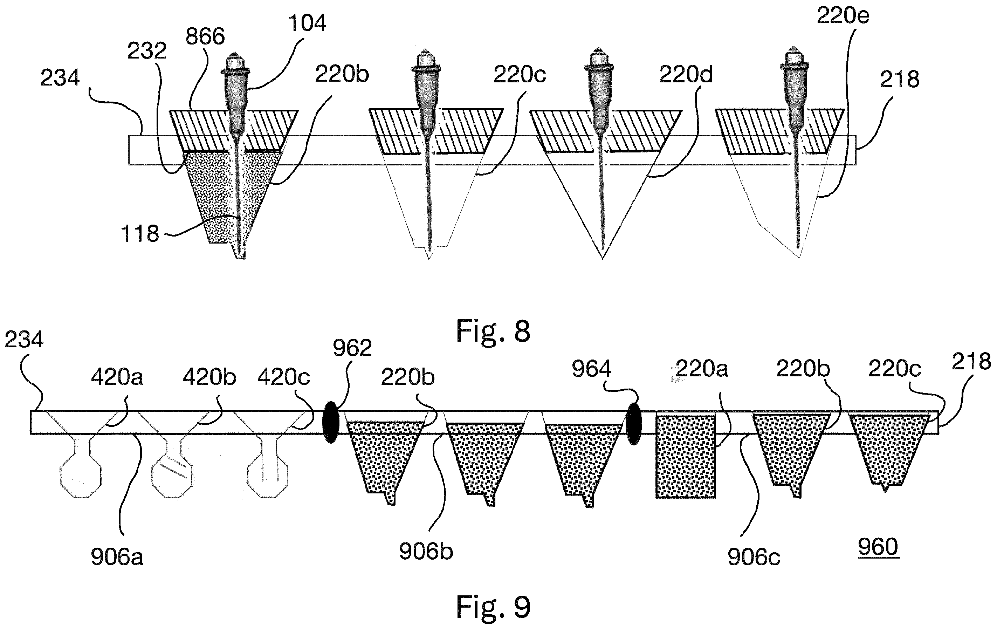

Figure 8 illustrates a further embodiment in which the pipetting robot 102 comprises a guiding sleeve 866 that can be used to guide the needle 118 of the syringe 104 into each container cavity 220b to 220e. The guiding sleeve 866 is mounted onto the syringe 104 so that it encloses the syringe 104. The guiding sleeve 866 is adapted in its shape to the opening 232 of the respective container cavity 220b to 220e. Accordingly, the guiding sleeve 866 can be inserted flush into the opening 232 to be secured therein. When the needle 118 is secured in the opening 232 by means of the guide sleeve 866, it is correctly aligned within the container cavity 220b to 220e and is therefore able to completely aspirate residual liquid from the liquid collection portion 236. The guide sleeve 866, adapted to the respective container cavity 220b to 220e, ensures that the needle 118 is aligned either centrally or decentrally in the respective container cavity.

Figure 9 is a sectional side view showing a modular plate system 960 which comprises at least two liquid storage plates as described above. In the example of Figure 9, a total of three liquid storage plates 906a, 906b, 906c are selectively coupled to form the modular plate system 960. A coupling mechanism 962, 964 is provided between each pair of liquid storage plates to connect the liquid storage plates 906a, 906b, 906c. By providing the coupling mechanism 962, 964 as uniformly designed snap-in mechanisms, the relative arrangement of the individual plate modules represented by the liquid storage plates 906a, 906b, 906c can be freely selected, for example according to a liquid handling protocol according to which the robotic liquid handling system 100 is controlled to perform dispensing, transferring, and mixing of the liquids in the workflow.

As a further modification, at least one of the container cavities may form an imaging cavity which can be used to image a sample arranged therein. For example, in the configuration shown in Figure 3, the otherwise conventionally shaped container cavity 220a may be at least partially transparent to allow imaging of a sample which is arranged in the container cavity 220a. Thus, the bottom 242 of the container cavity 220a may be transparent so that a sample in the container cavity 220a can be imaged by an optical system arranged below the container cavity 220.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: robotic liquid handling system
- 102: pipetting robot
- 104: syringe
- 106: liquid storage plate
- 108: pump system
- 110: sample
- 112: flow cell
- 114: bottle container
- 116: control unit
- 118: needle
- 220a-220f: container cavities
- 230: liquid
- 232: opening
- 234: top side
- 236: liquid collection portion
- 238: point
- 240: recess
- 242: bottom
- 244: interior surface
- 420: mixing cavity
- 430: liquid
- 432: liquid
- 420a-420d: container cavities
- 446: upper section
- 448: middle section
- 450: lower section
- 460b: mixing fin
- 460c: mixing tube
- 720: container cavity
- 742: bubble trap
- 866: guiding sleeve
- 906a-906c: liquid storage plate
- 960: modular plate system
- 962: coupling mechanism
- 964: coupling mechanism

## Claims

1. A liquid storage plate (106) configured to be used in a liquid handling system (100) having a syringe (104) with a needle (118) for liquid transfer, comprising:
a substantially planar carrier (218) defining a top side (234),
a plurality of container cavities (220) arranged on the carrier (218), each container cavity (220) extending downwards from the top side (234) and
configured to store a liquid (230),
wherein at least one of the container cavities (220) forms a aspiration-optimized cavity (220b-220f) having an opening (232) at the top side (234) and
a lowermost liquid collection portion (236) arranged opposite to the opening (232),
wherein the liquid collection portion (236) is narrowed in relation to the remainder of the aspiration-optimized cavity (220b-220f) to allow collection of residual liquid and insertion of the needle (118) for aspiration of the residual liquid.

2. The liquid storage plate (106) according to claim 1, wherein the aspiration-optimized cavity (220b-220f) tapers continuously downwards from the opening (232) to form the liquid collection portion (236).

3. The liquid storage plate (106) according to claim 1 or 2, wherein the liquid collection portion (236) of the aspiration-optimized cavity (220c, 220d, 220e) tapers to a point (238).

4. The liquid storage plate (106) according to any one of the preceding claims, wherein the aspiration-optimized cavity (220b, 220c) comprises a bottom (242) having a recess (242) which forms the liquid collection portion.

5. The liquid storage plate (106) according to any one of the preceding claims, wherein the aspiration-optimized cavity (220b-220f) has an anti-adhesive interior surface (244).

6. The liquid storage plate (106) according to any one of the preceding claims, wherein at least one of the container cavities (220) forms a mixing cavity (420a-420d) comprising a swirling structure configured to cause turbulence in the liquid upon liquid transfer.

7. The liquid storage plate (106) according to claim 6, wherein the swirling structure comprises at least one of the following:
an irregular contouring of an interior surface of the mixing cavity (420a, 420d),
at least one liquid deflecting element (460b) inwardly projecting from the interior surface of the mixing cavity (420b),
at least one mixing tube (460c) extending downwards from the opening (232) of the mixing cavity (420c).

8. The liquid storage plate (106) according to any one of the preceding claims, comprising a one-piece structure in which the container cavities (220) are formed integrally on the carrier (218).

9. The liquid storage plate (106) according to any one of the claims 1 to 7, comprising a multi-piece structure in which at least one of the container cavities is formed of an exchangeable container cavity (220f) releasably mounted on the carrier (218).

10. The liquid storage plate (106) according to claim 9, wherein at least one of the container cavities forms a functional unit (740) configured to provide an additional function going beyond a function of the other container cavities.

11. The liquid storage plate (106) according to any one of the preceding claims, wherein at least one of the container cavities forms an imaging cavity (220a) arranged on the carrier (218) and configured to receive a sample, wherein the imaging cavity (220a) is at least partially transparent to allow imaging of the sample.

12. A modular plate system (860) comprising at least two liquid storage plates (806a, 806b, 80c) (106) according to any one of the preceding claims and a coupling mechanism (862, 864) configured to modularly couple the liquid storage plates (806a, 806b, 80c).

13. A robotic liquid handling system (100) for handling liquids which are to be applied to a sample, comprising at least one liquid storage plate (106) according to any one of the claims 1 to 12 and a pipetting robot (102) having a syringe (104) with a needle (118) configured to aspirate liquid from and inject liquid into the container cavities (220).

14. The robotic liquid handling system (100) according to claim 13, comprising a control unit (116) configured to control the pipetting robot (102) in accordance with a predetermined liquid handling protocol, wherein the liquid storage plate (106) is configured as a consumable adapted to the predetermined liquid handling protocol.

15. The robotic liquid handling system (100) according to claim 13 or 14, wherein the pipetting robot (102) comprises a guiding sleeve (866) configured to guide the needle (118) of the syringe (104) into each container cavity (520a, 520b, 520c).
